# EUROPEAN PATENT SPECIFICATION

(11) **EP 1 877 714 B1**
(45) Date of publication and mention of the grant of the patent: **24.02.2010**
(21) Application number: 06743366.4
(22) Date of filing: 21.04.2006
(51) Int. Cl.: F27B 1/21, F27D 3/00, C21B 13/02, F27B 19/04

(54) **REDUCTION FURNACE**
REDUKTIONSOFEN
FOUR DE REDUCTION

(30) Priority: 22.04.2005 IT MI20050731
(43) Date of publication of application: 16.01.2008
(73) Proprietor: DANIELI & C. OFFICINE MECCANICHE S.p.A., 35042 Buttrio (UD) (IT)
(72) Inventor: VRECH, Arbeno, I-33100 Udine (IT); MITOI, Ilie-Florian, R-76666 Bucarest (RO); MARCONI, Gianfranco, I-34170 Gorizia (IT)
(74) Representative: Cinquantini, Bruno
(86) International application number: PCT/EP2006/061738
(87) International publication number: WO 2006/111574

(56) References cited:
- WO-A-01/14598

## Description

### Field of the invention

The present invention relates to a reduction furnace, in particular a reduction furnace for the production of metallic iron by means of the direct reduction of iron ore, extracted from mines, at a temperature that is less than the melting point of the components.

### Prior art

The product obtained as a result of a direct reduction process is known as DRI or "Direct Reduced Iron". The direct reduction process converts iron ore into highly metallized iron, in the form of lump ore, pellets or a mixture of these components. The process produces reduced iron containing variable quantities of carbon in the form of Fe₃C. This material is the ideal foodstock for electric arc furnaces used in the production of high-quality steel. Direct reduction systems can thus be made to integrate with systems upstream of electric steelmaking plants.

In existing systems, the hot DRI from the furnace or reactor, also known as a shaft furnace, is usually briquetted or cooled in specific vessels, as it is extremely reactive in air at the temperature at which it leaves the reduction furnace.

Transporting the DRI directly to the electric arc furnace is clearly advantageous but involves a number of requirements, namely:
- the connection between the two furnaces must be rendered inert, as the metal will re-oxidize when exposed to atmospheric air and humidity with a significant loss of metallization;
- the reduction and steelmaking plants must be separated by means of a temperature buffer to keep the DRI at a suitable temperature for being fed into the electric arc furnace;
- the flow of hot material from the furnace must be metered;
- heat loss must be kept to a minimum.

The separation of the reduction and steelmaking plants, by means of a buffer, is necessary because the electric arc furnace operates on a batch cycle basis, whereas direct reduction plants operate continuously and it is neither possible nor advantageous to stop the flow in the reduction furnace according to the amount of DRI that is used. Moreover, reduction plants run for long periods of time, usually without any short scheduled stops during the year, generally being shut down once for approximately 20 days.

Since electric arc furnaces must usually be shut down once a week and, for a variety of reasons, are subject to sudden stoppages, it has been necessary to develop devices so that the production of DRI can continue even in such conditions. This has been achieved by adding a cooling vessel in which the material is cooled to ambient temperature, or at least to temperatures at which rapid re-oxidation is prevented, before being discharged and stored ready for later use.

Note that the cooling system is not necessarily always associated with an arc furnace. Indeed, the cooling vessel can also be used to cool the DRI and render the plant independent of the end use.

For cases in which the material from the reduction furnace is fed into an EAF at the same works, reduction systems providing for the direct connection between the reduction furnace and melting furnace for discharging both hot and cold DRI simultaneously are known in the prior art. For instance, document WO 01/14598 describes a system with a dynamic gas seal or seal leg between the reduction furnace and the buffer. In this way the buffer is rendered inert thanks to the seal leg.

Once the point of delivery to the EAF has been defined in the melting furnace design, the presence of any vertical elements in the high temperature connecting means/system will inevitably and disadvantageously raise the height of installation of the reduction furnace. For this reason systems comprising the lowest number of vertical elements are preferable.

Disadvantageously, the presence of a seal leg means the reduction furnace must be placed even higher up if the electric arc furnace (EAF) is gravity-fed. The reduction shaft, which is already high, is thus made even higher, increasing the costs of construction and installation at the works.

Furthermore, this type of system results in loss of temperature of the DRI as the hot off-gases from the process are withheld in the reactor and do not reach the buffer. However, hot gas must be used to render the buffer inert, to prevent any disadvantageous cooling of the DRI, and energy is thus wasted in heating the inert gas.

It must also be possible to cut off the EAF hot charging device and cool the DRI, in another specific system, while keeping the reduction system operational in all conditions.

The need is therefore felt to implement an innovative reduction furnace capable of overcoming the drawbacks described above.

### Summary of the invention

The main purpose of this invention is to produce a reduction furnace that, by integrating the discharge, transfer and buffer functions in a sloping pipe directly connected to the reduction furnace and the hot off-gases from the process, is capable of reducing heat loss during the passage from the reduction furnace to the electric arc furnace to a minimum, thus reducing electric furnace cycle times, i.e. reducing so-called tap to tap time, and thus reducing energy consumption. Above all this guarantees increased steel plant productivity because a shorter tap to tap time means the same system can be used to produce more castings.

The present invention therefore achieves the purposes described above with a reduction furnace, defining a longitudinal axis, for the production of metallic iron by means of the direct reduction of iron ore that, according to claim 1, comprises an iron ore feed zone, an iron ore reduction zone, and a metallic iron discharge zone, characterised in that it comprises accumulation means communicating at an inlet end with said metallic iron discharge area and at an output end with gas sealing means, said accumulation means being suitable for accumulating said metallic iron together with the off-gases from the reduction process.

The diameter and length of the pipe are functions of the volume of the buffer required to separate the reduction and steelmaking plants. The slope of the pipe, which must have an angle steeper than the actual DRI repose angle, which is approximately 30°, is such to prevent bridging of the DRI in the pipe.

The furnace according to the present invention advantageously reduces the amount of power required by the DRI cooling circuit in the reduction system and eliminates cold DRI handling and management costs.

One advantage of the invention is the fact that the hot DRI, produced in the reduction furnace, is sent directly to the steelwork's electric furnace while being maintained at a temperature of approximately 700°C. Furthermore, the system allows the DRI discharge to be controlled and sent simultaneously or alternately through a cooling vessel, so as to obtain cold DRI in a known manner. The portions of DRI to be sent hot to the buffer or to the cooling vessel for cooling, can be metered as required.

Another advantage consists of the maximization of the discharge height of the hot DRI, since by integrating the buffer in the reactor, the final discharge point can be placed at the maximum possible height, after the seal leg.

The transfer pipe involves the use of one less element compared to the reduction systems known in the prior art, with the elimination of the gas seal leg, and relative inert gas injection device, which connects the reactor to the hot inert vessel.

The claims attached hereto describe preferred embodiments of the invention.

### Brief description of the drawings

Further characteristics and advantages of this invention will become clear from the following detailed description of a preferred, but not exclusive, embodiment of a reduction furnace, that is merely illustrative and not limitative, with the help of the drawings that are attached hereto, in which:
Fig. 1 is a front view of a system comprising the furnace according to the present invention;

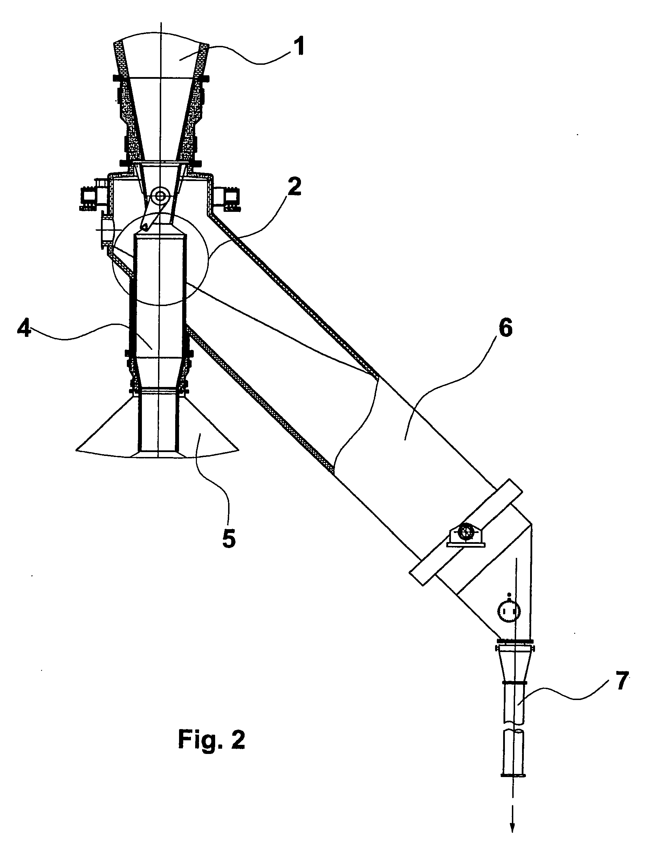

Fig. 2 is a cross-section of a part of the furnace in Fig. 1;
Fig. 3 is a cross-section, on a plane orthogonal to that in Fig. 1, of a detail of the furnace according to the invention;
Figs. 4 and 5 are cross-sections of the detail in Fig. 3 on the same plane as Fig. 1.

### Detailed description of a preferred embodiment of the invention

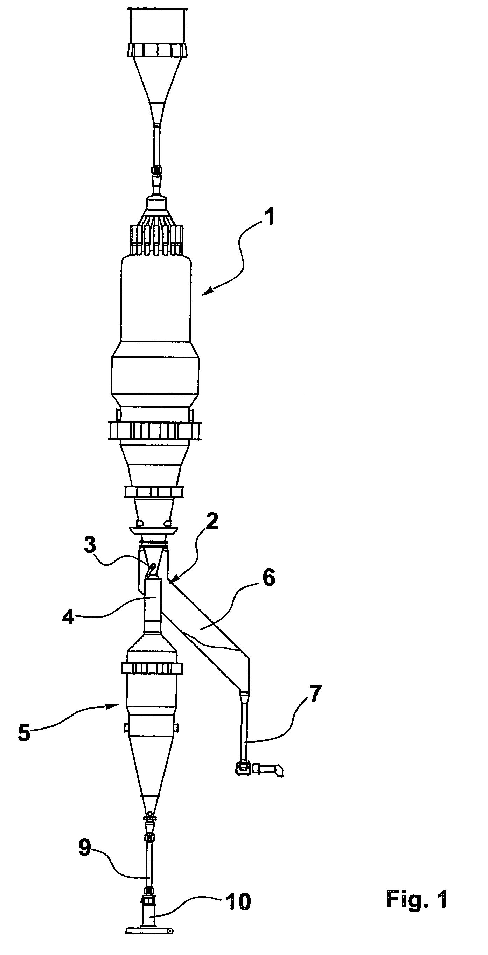

With reference to Fig. 1, a reduction shaft is illustrated. Said reduction shaft comprises:
- a reduction furnace or reactor 1;
- a transfer pipe 6 integrated in the reactor 1;
- a cooling vessel 5.

The furnace or reactor 1 produces hot DRI, starting from oxides in the form of pellets and/or lumps, which it discharges at a high temperature through a zone, preferably a conically-shaped zone, into the transfer pipe 6.

Said transfer pipe 6, through regulating means 3 that control the hot discharge from the reactor 1, enables portions of DRI to be directed simultaneously or alternately to an electric arc furnace and to the cooling vessel 5, and also acts as an accumulator, also referred to as a "buffer" in this description.

A collecting duct 4, inserted into the pipe 6 and having a diameter larger than the base of the cone of the reactor 1, is directly connected to the cooling vessel 5 and material passes through said duct at all times when the system is running. In the area 2 of the transfer pipe 6 a pile of material builds up according to the natural repose angle thereof.

The cooling vessel 5 is in turn directly connected to a cold discharge device 10 via a dynamic gas seal leg 9. In this case there is thus a single flow of material from the reactor 1, even from the charge hopper, to the base of the shaft or column. The activation of the discharge device 10 generates a flow of material along the entire height of the reduction shaft, while the repose angles in the area 2 remain unchanged. The area 2 thus becomes an open point at which it is possible and easy to pick up portions of hot DRI which can be diverted, discharged or forced out of the collecting duct 4 and thus towards the pipe or buffer 6.

The hot discharge regulating means may comprise, for instance, a blade 3 arranged transversely in relation to the flow of material from the reactor 1, controlled by a hydraulic cylinder. This blade 3 sweeps the pile of material in the area 2 with an oscillating movement, so that portions of hot DRI can be discharged outside the duct 4 towards the transfer pipe 6 and, at the same time, inside the duct 4 towards the cooling vessel 5.

The speed at which the blade 3 oscillates determines the control of the input flow both to the cooling vessel 5 and to the transfer pipe 6. When in the home position the blade 3 is parked outside the pile of DRI and does not obstruct the flow towards the cooling vessel 5.

The blade 3 may be operated autonomously, or it may advantageously be joined to a "flow promoter" 8 the function of which is to prevent bridging in the end part of the discharge cone 1' of the cone of the reactor 1. This basically consists of through pipes with wear-proof protuberances that rotate by a few degrees about their own axis alternately in the two directions at very low frequency. This movement prevents bridging in the discharge cone 1' and guarantees a good material flow. The flow promoters 8 are not metering systems. The alternating movement of these elements can be likened in terms of frequency to that of the blade 3. The blade 3 can therefore advantageously be operated by appropriately connecting it to the actual axis H of the flow promoter 8. The blade 3 regulates the amount of material that is discharged, while the flow promoter 8 promotes a correct and full supply.

Whether the blade 3 is autonomous or fixed to the axis of the flow promoter 8, in the home position it is always parked outside the pile of DRI that builds up in the area 2 in the upper part of the transfer pipe 6, and does not obstruct the flow of DRI towards the cooling vessel 5.

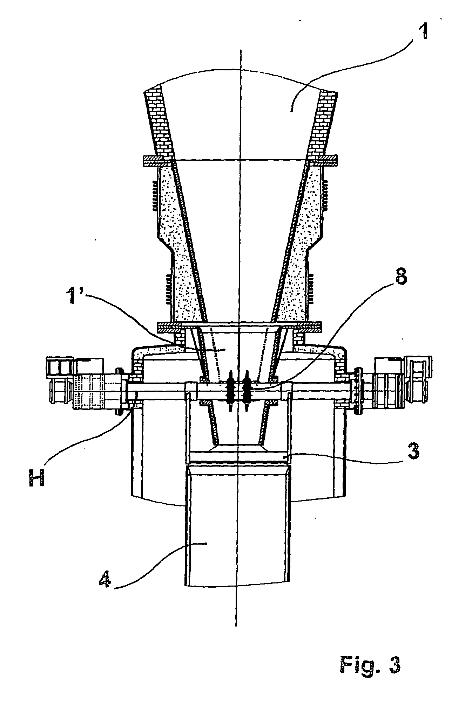

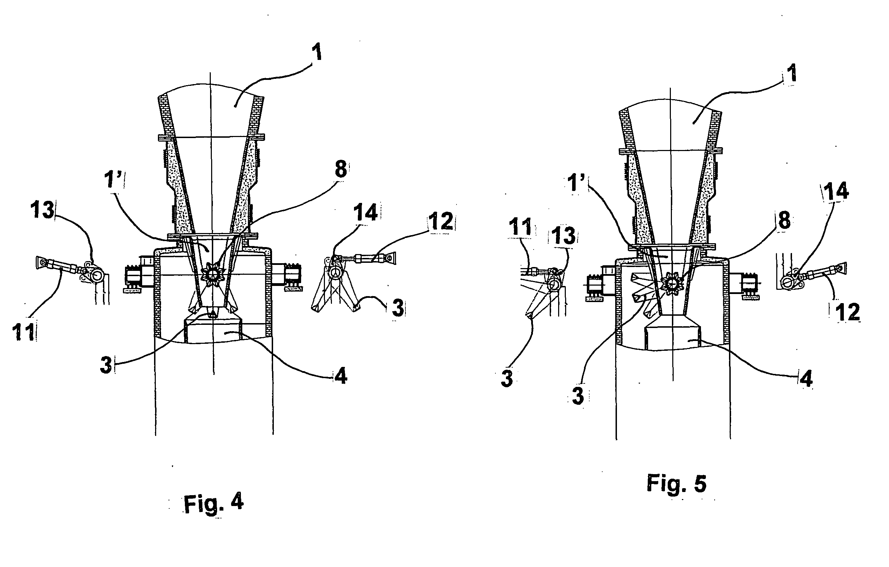

An advantageous alternative form of the regulating means, which allows the flow promoter 8 to remain active both when the blade 3 is in the home position and when acting as a meter, is illustrated in figures 3, 4 and 5. In the home position the blade 3 continues to oscillate in an empty environment. For that purpose there are two actuators 11, 12, for instance hydraulic actuators, that drive two levers 13, 14 that are integral with the axis H of the flow promoter. With the blade 3 at work or in the home position only one of the two hydraulic actuators 11, 12 is operational, while the hydraulic circuit of the other is short-circuited so as not to offer mechanical resistance.

The reactor 1 can thus be discharged, simultaneously diverting a portion of the material to the transfer pipe 6 and a portion to the cooling vessel 5, depending on the way in which the devices 3 and 10 are activated and controlled.

The hot DRI that collects inside the transfer pipe 6, set at a slope and with an internal coating of refractory material, passes through the actual pipe together with the hot off-gases from the process. The pipe 6 thus simultaneously performs the following functions:
- it acts as a buffer between the continuous process reduction furnace or reactor 1, and the batch process electric arc furnace;
- it maintains the correct temperature for feeding an electric arc furnace.

The presence of the off-gases from the process in the transfer pipe 6 advantageously eliminates the problem of DRI re-oxidation and also promotes heat retention.

The hot DRI that accumulates in the transfer pipe 6 is discharged towards the user, at fixed intervals of time, via a dynamic seal leg 7, which has the function of maintaining the off-gases from the process inside the pipe 6. The pipe/buffer is not thus inert. At the end of the seal leg 7, there is a second flow regulating device, for instance a vibro-extractor, rotary valve, oscillating blade or the like.

At this point the hot DRI may be transported directly by gravity to the electric arc furnace, if the systems are arranged very close together, or transferred to the electric arc furnace by means of an inert conveyor system.

During the design phase the diameter and length of the transfer pipe 6 must be appropriately defined as a function of the volume of the buffer that is needed in order to separate the reduction furnace and the steelmaking plant.

The specific embodiments described in this document are not limitative and this patent application covers all the alternative embodiments of the invention as set forth in the claims.

## Claims

1. Reduction furnace (1), defining a longitudinal axis, for the production of metallic iron by means of a direct reduction process of iron ore comprising an iron ore input zone, an iron ore reduction zone, a metallic iron discharge zone, and accumulation means (6) **characterised in that** the accumulation means (6) are shaped as a pipe sloping in relation to the longitudinal axis, are directly connected to the reduction furnace, communicate at an inlet end with the metallic iron discharge zone of the reduction furnace and at an outlet end with gas sealing means (7), and are suitable for accumulating said metallic iron along with the off-gases from the reduction process in the sloped portion.

2. Reduction furnace according to claim 1, comprising a duct (4), inserted into the metallic iron discharge zone, to feed said metallic iron into a cooling vessel (5).

3. Reduction furnace according to claim 2, comprising regulating means (3) for controlling a flow of metallic iron being discharged from said discharge zone of the furnace (1).

4. Reduction furnace according to claim 3, wherein said regulating means (3) can direct said flow simultaneously or alternately to said accumulation means (6) and to said duct (4).

5. Reduction furnace according to claim 4, wherein said accumulation means (6) are basically cylindrical in shape and arranged at a slope of more than 30° in relation to the longitudinal axis of the reduction furnace (1).

6. Reduction furnace according to claim 4, wherein said regulating means comprise a blade (3) arranged transversely in relation to the flow of the metallic iron, adapted to oscillate.

7. Reduction furnace according to claim 6, wherein said regulating means comprise metallic iron flow promoting means (8) associated with the blade (3) and that can be operated in a reciprocally coordinated way to prevent bridging of the metallic iron in the lower end part of the reactor (1).

## Patentansprüche

1. Reduktionsofen (1), der eine Längsachse definiert, für die Erzeugung von metallischem Eisen mittels eines Direktreduktionsprozesses von Eisenerz, umfassend eine Eingabezone für Eisenerz, eine Reduktionszone für Eisenerz, eine Austragszone für metallisches Eisen und Sammelmittel (6), **dadurch gekennzeichnet, dass** die Sammelmittel (6) als ein Rohr geformt sind, das in Relation zu der Längsachse schräg verläuft, direkt mit dem Reduktionsofen verbunden sind, an einem Einlassende mit der Austragszone für metallisches Eisen des Reduktionsofens und an einem Auslassende mit Gasabdichtmitteln (7) in Verbindung stehen, und geeignet sind, das metallische Eisen zusammen mit den Abgasen aus dem Reduktionsprozess in dem schräg verlaufenden Abschnitt zu sammeln.

2. Reduktionsofen nach Anspruch 1,
der einen Kanal (4) umfasst, der in die Austragszone für metallisches Eisen eingesetzt ist, um das metallische Eisen in einen Kühlbehälter (5) einzuspeisen.

3. Reduktionsofen nach Anspruch 2,
der Regelmittel (3) zum Steuern einer Strömung von metallischem Eisen, das aus der Austragszone des Ofens (1) ausgetragen wird, umfasst.

4. Reduktionsofen nach Anspruch 3,
wobei die Regelmittel (3) die Strömung gleichzeitig oder abwechselnd zu den Sammelmitteln (6) und zu dem Kanal (4) lenken können.

5. Reduktionsofen nach Anspruch 4,
wobei die Sammelmittel (6) eine im Grunde zylindrische Form aufweisen und unter einer Schräge von mehr als 30° in Relation zu der Längsachse des Reduktionsofens (1) angeordnet sind.

6. Reduktionsofen nach Anspruch 4,
wobei die Regelmittel eine Lamelle (3) umfassen, die quer in Relation zu der Strömung des metallischen Eisens angeordnet ist und ausgebildet ist, um zu schwingen.

7. Reduktionsofen nach Anspruch 6,
wobei die Regelmittel Strömungsfördermittel (8) für metallisches Eisen umfassen, die der Lamelle (3) zugeordnet sind und die auf eine reziprok koordinierte Weise betrieben werden können, um ein Überbrücken des metallischen Eisens in dem unteren Endteil des Reaktors (1) zu verhindern.

## Revendications

1. Four de réduction (1), définissant un axe longitudinal, pour la production de fer métallique au moyen d'un procédé de réduction directe de minerai de fer, comportant une zone d'entrée du minerai de fer, une zone de réduction du minerai de fer, une zone de décharge du fer métallique, et des moyens d'accumulation (6), **caractérisé en ce que** les moyens d'accumulation (6) se présentent sous la forme d'un tube incliné par rapport à l'axe longitudinal, sont directement reliés au four de réduction, communiquent au niveau d'une extrémité d'entrée avec la zone de décharge du fer métallique du four de réduction et au niveau d'une extrémité de sortie avec des moyens de scellage au gaz (7), et sont adaptés pour accumuler ledit fer métallique ainsi que les dégagements gazeux provenant du processus de réduction dans la partie inclinée.

2. Four de réduction selon la revendication 1, comportant un conduit (4), inséré dans la zone de décharge du fer métallique, pour acheminer ledit fer métallique dans une cuve de refroidissement (5).

3. Four de réduction selon la revendication 2, comportant des moyens de régulation (3) pour commander un écoulement de fer métallique déchargé à partir de ladite zone de décharge du four (1).

4. Four de réduction selon la revendication 3, dans lequel lesdits moyens de régulation (3) peuvent diriger ledit écoulement de manière simultanée ou alternée vers lesdits moyens d'accumulation (6) et vers ledit conduit (4).

5. Four de réduction selon la revendication 4, dans lequel lesdits moyens d'accumulation (6) ont pratiquement une forme cylindrique et sont conçus avec une pente supérieure à 30° par rapport à l'axe longitudinal du four de réduction (1).

6. Four de réduction selon la revendication 4, dans lequel lesdits moyens de régulation comportent une lame (3) agencée transversalement par rapport à l'écoulement du fer métallique, adaptée pour osciller.

7. Four de réduction selon la revendication 6, dans lequel lesdits moyens de régulation comportent des moyens (8) favorisant l'écoulement du fer métallique, associés à la lame (3) et qui peuvent être actionnés de manière réciproquement coordonnée pour empêcher un accrochage du fer métallique dans la partie d'extrémité inférieure du réacteur (1).
